# EUROPEAN PATENT SPECIFICATION

(11) **EP 1 474 293 B1**
(45) Date of publication and mention of the grant of the patent: **20.08.2014**
(21) Application number: 03705695.9
(22) Date of filing: 09.01.2003
(51) Int. Cl.: B32B 3/12

(54) **METHOD OF MAKING STRUCTURAL CELLULAR CORES SUITABLE TO USE OF WOOD**
VERFAHREN ZUR HERSTELLUNG VON ZELLULAREN STRUKTURKERNEN GEEIGNET ZUR VERWENDUNG VON HOLZ
PROCEDE DE FABRICATION D'AMES CELLULAIRES STRUCTURELLES ADAPTEES A L'UTILISATION DE BOIS

(30) Priority: 14.01.2002 US 46182
(43) Date of publication of application: 10.11.2004
(73) Proprietor: SING, Peter, McCleary, WA 98557 (US)
(72) Inventor: SING, Peter, McCleary, WA 98557 (US)
(74) Representative: Bartelds, Erik
(86) International application number: PCT/US2003/000572
(87) International publication number: WO 2003/059623

(56) References cited:
- JP-A- 6 179 448
- US-A- 2 062 590
- US-A- 3 844 011
- US-A- 3 887 739
- US-A- 4 536 427
- US-A- 4 876 134
- US-A- 4 948 445
- US-A- 5 006 391
- US-A- 5 039 567

## Description

### BACKGROUND OF THE INVENTION

FIELD: The subject invention is in the field of structures which comprise primarily a core and one or two thin panels or pieces attached to the core.

PRIOR ART : Common examples of structure using such cores are (1) solid core doors in which the cores are solid wood and the panel (s) wood veneer; (2) aircraft structures which comprise metal panels (surfaces) and honeycomb plastic cores; and (3) boat hull structure comprising balsa wood cores and fiberglass structural surfaces. Foam plastic is a commonly used core material, used independently or as a filler in honeycomb cores. The practical and economic utility of each kind of core structure depends on many factors, primarily strength to weight ratio stiffness to weight ratio, material costs, manufacturing costs, durability and variety of practical applications.

A prior art method of making hollow cell cellular cores is disclosed in US 5 006 391. This method comprises the steps of:
1) providing a plurality of corrugated plies, each corrugated ply comprising a plurality of flat corrugation apexes and a plurality of thickness legs connecting the apexes;
2) creating a stack of said corrugated plies by adhesively attaching said corrugated plies together with said apexes of each of said corrugated ply against said apexes on an adjacent corrugated ply; and
3) creating said cellular cores by cutting slices off said stack of corrugated plies, cutting perpendicular to said ribs.

In this method adjacent corrugated plies or sheets are inverted or offset to place the apexes on opposite sides in facing relationship.

Further examples of prior art methods of making hollow cell cellular cores are discussed below.

US 5 039 567 discloses a method of making a resilient panel including a honeycomb-like core of plastic material and two facing sheets attached to the core by thermal compression bonding. The honeycomb-like core is made by stacking two thermoplastic sheets with a comb-shaped spacer in between, and then pressing the assembly against a plurality of spaced apart bonding ribs. In this way strip-like areas of the sheets between the fingers of the spacer comb are thermal compression bonded together. These steps are repeated with a fresh thermoplastic sheet and another comb-shaped spacer, which is offset with respect to the first spacer. In this way a laminated assembly having a pre-selected number of laminations is provided. After removal of the spacers this assembly is then repeatedly cut perpendicular to the direction of the strip-like bonded areas, resulting in a plurality of core strips. Each core strip is then expanded into a honeycomb configuration. After expansion each side of the core is planarized before being thermal compression bonded to the facing sheet.

In US 3 844 011 a method of making a labyrinth seal for a turbine engine is disclosed, in which a powder metal honeycomb structure is formed by sintering the powder metal and then punching the network forming the honeycomb into the sintered metal by means of a tool.

US 3 887 739 discloses a method of manufacturing a honeycomb structure in which a plurality of filament rovings are wound into slots between a plurality of dies to form cellular walls. The overlapping rovings are bonded together and are flattened at the intersections to increase the bonding area.

In US 4 876 134 a method is disclosed for making a laminated panel core of stainless steel. Stainless steel foils are repeatedly folded inward and outward to make a plurality of multi-layered folded sheets. The sheets are stacked with adjacent sheets being inverted or offset. An adhesive is applied to a portion of the surfaces of the folded sheets and a desired number of sheets is laminated. The laminate is then sliced in a plane perpendicular to the plane generally defined by each of the sheets. Each slice is extended and deformed in a plane parallel to the plane in which it is sliced and in the direction of lamination.

US 4 948 445 discloses a method for forming cellular core structures from corrugated fibreboard using flat sheets of single wall corrugated board of rectangular configuration. Evenly spaced die cut lines are formed in the sheets, which are then provided with individual glue spots, the glue spots on one sheet being offset with respect to those on the following sheet. The sheets are then stacked and glued, after which stacked strips are sheared off along the die cut lines. These stacked strips are expanded to form cellular core structures.

US 4 536 427 discloses a method of making a lightweight contourable core from balsa wood. The method involves sawing a basic block into a plurality of flat-grain panels by means of a horizontal bandsaw. An adhesive is applied to one face of each flat-grain panel, and the panels are bonded together before being sawn in the grain direction at right angles to the adhesive plane. The resulting flat-grain panels consist of parallel strips bonded by the adhesive. These panels are again provided with adhesive and bonded together, and then sliced by a bandsaw at right angles to both adhesive planes. The resulting end-grain core is a rectangular array of end-grain blocks adhesively bonded together at their adjacent edges.

In US 2 062 590 a method of creating a design is disclosed. This method involves stacking and bonding primary sheets of e.g. wood and cutting the stack of sheets at right angles to the plane of the sheets to obtain secondary sheets. These secondary sheets, consisting of bonded strips, are again stacked and bonded to form a design block. Design sheets consisting of bonded cubes may be cut from the design block at right angles to the bonded surfaces

And finally, JP 6 179448 A discloses a method of manufacturing a pallet, in which the load carrying surface of the pallet is made up of a plurality of parallel beams. Each beam is made of two beam halves that are welded together. Each beam half has a cellular structure that is formed by injection molding a synthetic resin like PP between male and female molds.

It has long been known in the art that wooden cores offer significant advantages because of the unique physical properties of wood, such as high strength to weight and high stiffness to weight ratios. However, because of these and other characteristics, wood is not well adapted to any known conventional techniques for making celled cores and making celled cores with known unconventional techniques is also considered to be too expensive.

Accordingly, the primary objective of the subject invention is to provide a method which enables economically acceptable manufacture of cellular cores made of wood. A secondary objective is that the method not involve the making and handling of parts that are small relative to the size of the cellular core.

### SUMMARY OF THE INVENTION

The subject invention is a method of making structural cellular cores that are suitable to the use of wood. For purposes of this disclosure, a ply is a thin, flat sheet of material. A rib is a thin strip of material having its long edges parallel. A ribbed ply is a ply with a plurality of ribs each attached at one of their long edges to the ply, spaced apart, parallel to each other an distributed over one face of the ply. A filler sheet is sheet of material having appropriate qualities and dimensions for filling the cells of a core produced by the subject method. A filler/ply component is a ply adhesively attached to a filler sheet. A filler ply stack is a stack of filler/ply components adhesively attached, forming a stack of alternative plies and filler sheets, to a designated height. A ribbed ply stack is a stack of ribbed plies adhesively attached, ply, ribs, ply, ribs, to a designated height. A filler ribbed ply has a, filler material between the ribs. A hollow ribbed ply does not. A hollow core is a slice cut off of a ribbed ply stack perpendicular to the ribs in the stack. A filled core is a slice cut off of a stack of filled rib plies.

The ribs on all ribbed plies have free edges.

In disclosing the subject method, materials needed are considered to be available so that providing them is not included in the steps of the method.

In accordance with a first aspect of the invention as defined in claim 1, a method of making hollow cell cellular cores suitable to use of wood comprising the steps of:
1) providing a plurality of ribbed plies, the ribs having free edges, each ribbed ply comprising a ply and a plurality of ribs, said ribs having free edges;
2) creating a stack of said ribbed plies by adhesively attaching said ribbed plies together with said ply of each of said ribbed ply against said free edges of said ribs on an adjacent ribbed ply; and
3) creating said cellular cores by cutting slices off said stack of ribbed plies, cutting perpendicular to said ribs.

A preferred embodiment of the invention as defined in claim 1 is defined in dependent claim 2.

According to another aspect of the invention as defined in claim 3, a method of making filled cell cellular cores suitable to use of wood comprising the steps of:
1) providing a plurality of filled rib slices;
2) providing a plurality of plies;
3) making a stack of the plies and filled rib slices, stacked alternately and adhesively attached to each other; and
4) slicing said filled cellular cores from the stack, cutting perpendicular to the ribs.

A preferred embodiment of the invention as defined in claim 3 forms the subject matter of dependent claim 4.

Further preferred embodiments of the invention are defined in claims 5 and 6.

The invention is described in more detail below with reference to the attached drawings.

### BRIEF DESCRIPTION OF THE DRAWINGS

Fig. 1 illustrates a hollow celled core.
Fig. 2 illustrates a filled cell core.
Fig. 3 illustrates a rib holding fixture with some ribs being held.
Fig. 4 illustrates a hollow ribbed ply.
Fig. 5 illustrates a stack of hollow ribbed plies.
Fig. 6 illustrates a filler/ply component.
Fig. 7 illustrates a stack of filler/ply components adhesively attached.
Fig. 8 illustrates a filled rib slice.
Fig. 9 illustrates a stack of plies and filled rib slices adhesively attached and stacked alternately.
Fig. 10 illustrates a curved cellular core.

### DETAILED DESCRIPTION OF THE INVENTION

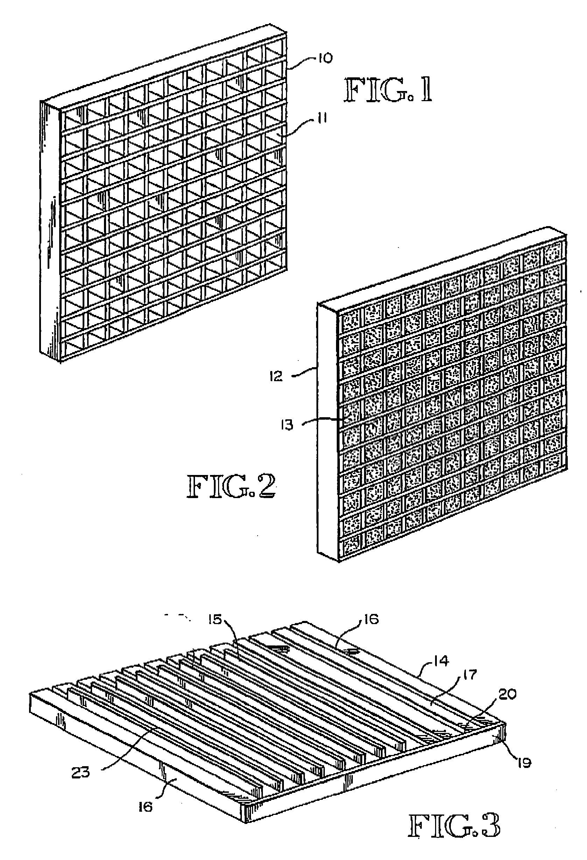

The subject invention is a method of making structural cellular cores which accommodates the use of wood. Fig. 1 illustrates a hollow cellular core 10 with hollow (non-filled) cells, cell 11 being typical. Fig. 2 illustrates a filled cell core 12. The cells, cell13 being typical, are filled with any of a variety of materials, foam plastic being a typical example.

Figs. 3 through 9 illustrate assemblages used in implementing the subject method. Fig. 3 illustrates a rib holding fixture 14 holding some ribs, rib 15 being typical. The fixture comprises a flat block 16 of suitable material, wood for example, having a plurality of slits, slit 16 being typical, in one of the block broad surfaces 17. The ribs, rib 15 being typical, are elongated, thin strips of material, wood for example. The width of the strips is greater than the depth of the slits so that when the ribs are seated in the slits, the ribs protrude from the slitted surface. Stop piece 19 closes off the ends, end 20 being typical, of the slits and serves to position the ribs evenly lengthwise.

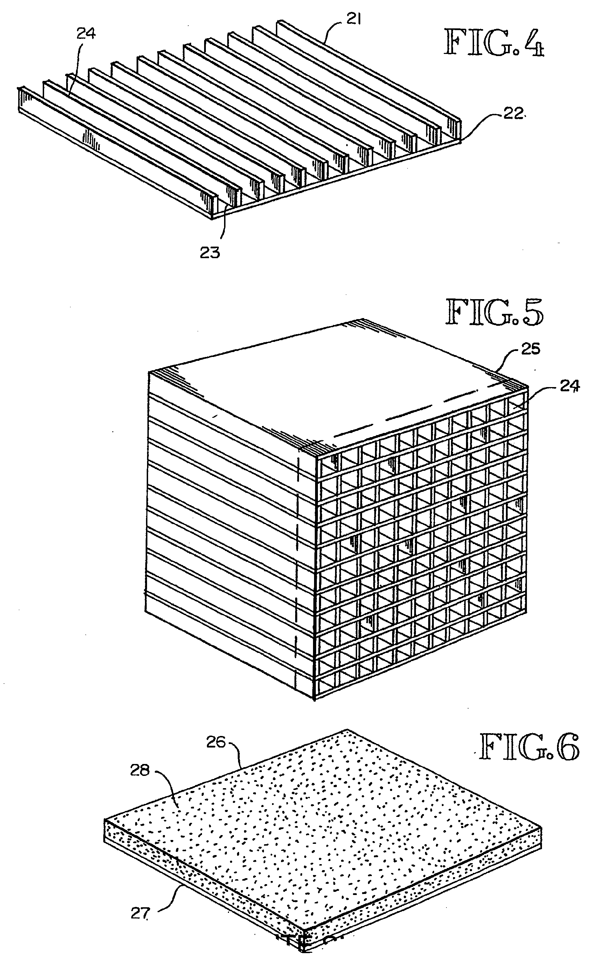

Fig. 4 illustrates a hollow ribbed ply 21, made by adhesively attaching a ply 22 to the exposed edges, edge 23 being typical, of ribs situated in the fixture. Each of the ribs has a free edge, edge 24 being typical.

Fig. 5 illustrates a stack 25 of hollow ribbed plies. The stack is made by adhesively attaching hollow ribbed plies together with free edges, free edge 24, Fig. 4 being typical, attached to the plies of adjacent hollow ribbed plies. Hollow cellular cores, Fig. 1, are made by slicing them from the stack of hollow ribbed plies perpendicular to the ribs in the stack, as indicated by the dashed lines.

Fig. 6 illustrates a filler ply assemblage 26 which is made by adhesively attaching ply 27 to filler material 28, a sheet of material, foam plastic for example, which will ultimately fill the cells of filled cellular cores.

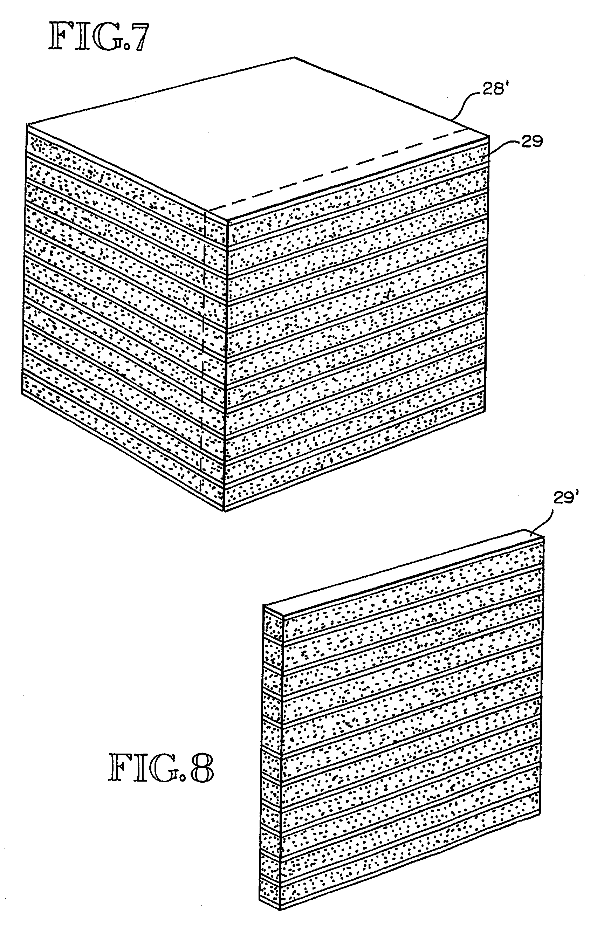

Fig. 7 illustrates a stack 28 of filler ply components, component 29 being typical, adhesively attached to each other such that plies and filler sheets are interspersed.

Fig. 8 illustrates a filled rib slice 29 made by slicing the filler ply component stack perpendicular to the rib, as indicated by the dashed lines in Fig. 7.

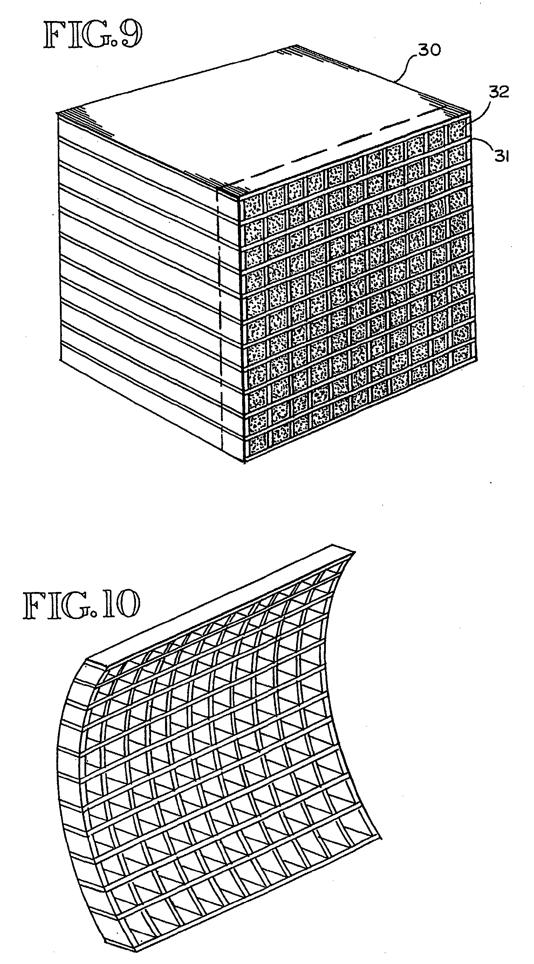

Fig. 9 illustrates a stack 30 of adhesively attached plies, ply 31 for example, and filled rib slices, slice 32 for example, the plies being interspersed between the slices. A filled cell core (13, Fig. 2) is made by slicing the stack of filled rib slices and plies perpendicular to the ribs, as indicated by the dashed lines.

Fig. 10 illustrates a curved cellular core, made by curved cuts to slice of cellular cores.

The basic method of making cellular cores suitable to use of wood comprises the steps of:
1) providing a plurality of ribbed plies, the ribs of the ribbed plies having free edges;
2) creating a stack of ribbed plies by adhesively attaching the plurality of ribbed plies together with the ply of each ribbed ply against the fee edges of an adjacent ribbed ply; and
3) creating cellular cores by cutting slices off the ribbed ply stack, cutting perpendicular to the ribs.

The method for making specifically hollow cell cellular cores comprises the steps of:
1) creating a plurality of hollow ribbed plies, Fig. 4, the ribs of each hollow ribbed ply having free edges, using the following steps:
   a) providing a plurality of plies;
   b) providing a plurality of ribs;
   c) providing a fixture for holding a plurality of ribs parallel to each other with one set of edges of the ribs in a flat plane and exposed above the fixture;
   d) installing the ribs in the fixtures;
   e) adhesively attaching a ply to the exposed edges of the ribs;
   f) allowing the adhesive used for the adhesive attachment to cure; and
   g) removing the hollow ribbed ply from the fixture;
2) creating a stack of hollow ribbed plies by adhesively attaching the plurality of hollow ribbed plies together with the ply of each hollow ribbed ply against the free edges of an adjacent hollow ribbed ply; and
3) creating hollow cell cellular cores by cutting slices off the stack of hollow ribbed plies, cutting perpendicular to the ribs.

The method for making specifically a filled cell cellular core comprises the steps of:
1) providing a plurality of filled rib slices, using the following steps:
   a) providing a plurality of plies;
   b) providing a plurality of filler layers;
   c) making a stack of alternate plies and filler layers, adhesively attached to each other; and
   d) making a plurality of filled ribbed plies by slicing them form the stack, slicing perpendicular to the ribs.
   e) providing a plurality of plies;
   f) making a stack of the plies and filled rib slices, stacked alternately with all ribs parallel and adhesively attached to each other; and
   g) slicing filled cell cellular cores from the stack, cutting perpendicular to the ribs.

It is considered that all cellular core embodiments made according to the subject methods, the intersectional joints, joint 33 for example, will be of adequate strength. However, if it is indicated that there will be unusually high loads on the intersectional joints so that additional strength is requires, the intersectional joints can be strengthened by any of a number of techniques, including applying a filler of thickened adhesive to at least one of the four corners of a joint.

All adhesive attachments may be augmented or replaced by mechanical fastening such as staples, nails and screws. Such augmentation may allow handling of adhesively attached assemblages before to adhesive in fully cured.

It is considered to be understandable from the above description that the subject invention meets its objective. It provides a method which enables economically acceptable manufacture of cellular cores made of wood. This is due in part to the fact that the method does not involve the making and handling of parts which are small relative to the size of the cellular core.

It is also considered to be understood that while certain examples of the subject invention are disclosed, other modifications of those disclosed are possible within the scope of the attached claims.

## Claims

1. A method of making hollow cell cellular cores (10) suitable to use of wood comprising the steps of:
1) providing a plurality of ribbed plies (21), the ribs (15) having free edges (24), each ribbed ply (21) comprising a ply (22) and a plurality of ribs (15), said ribs (15) having free edges (24);
2) creating a stack (25) of said ribbed plies (21) by adhesively attaching said ribbed plies (21) together with said ply (22) of each of said ribbed ply (21) against said free edges (24) of said ribs (15) on an adjacent ribbed ply (21); and
3) creating said cellular cores (10) by cutting slices off said stack (25) of ribbed plies (21), cutting perpendicular to said ribs (15).

2. The method of claim 1, wherein the step of providing a plurality of ribbed plies (21) comprises creating a plurality of hollow ribbed plies (21), the ribs (15) of each hollow ribbed ply (21) having free edges (24), using the following steps:
a) providing a plurality of plies (22);
b) providing a first plurality of ribs (15);
c) providing a fixture for holding a second plurality of ribs (15), selected from said first plurality of ribs (15), parallel to each other with one set of edges (23) of said second plurality of ribs (15) in a flat plane and exposed above said fixture;
d) installing, for each of said plurality of hollow ribbed plies (21), said second plurality of ribs (15) in said fixture;
e) using adhesive attachment, attaching one of said plurality of plies (22) to said exposed edges (23) of said second plurality of ribs (15);
f) allowing said adhesive attachment to cure; and
g) removing each of said hollow ribbed plies (21) from said fixture.

3. A method of making filled cell cellular cores (12) suitable to use of wood comprising the steps of:
1) providing a plurality of filled rib slices (32);
2) providing a plurality of plies (31);
3) making a stack (30) of the plies (31) and filled rib slices (32), stacked alternately and adhesively attached to each other; and
4) slicing said filled cellular cores (12) from the stack (30), cutting perpendicular to the ribs.

4. The method of claim 3, wherein the step 1) of providing a plurality of filled rib slices (32) comprises the substeps of:
1a) providing a plurality of plies (27);
1b) providing a plurality of filler layers (28);
1c) making a stack (28') of, alternately, said plies (27) and said filler layers (28), adhesively attached to each other; and
1d) making said plurality of said filled ribbed slices (32) by slicing them from said stack (28') of step c), slicing perpendicular to said ribs.

5. The method of any one of the preceding claims, wherein said cellular cores are cut or sliced off the stack by curved cuts to make curved cellular cores.

6. The method of any one of the preceding claims, wherein a stack (25; 30) is made of said ribbed plies (21) or said filled ribbed slices (32) such that the ribs of adjacent ribbed plies (21) or filled ribbed slices (32) are aligned.

## Patentansprüche

1. Verfahren zur Herstellung von zellulären Hohlkammer-Kernen (10), welche geeignet sind, Holz zu benutzen, umfassend die Schritte:
1) Zur-Verfügung-stellen von einer Vielzahl von gerippten Lagen (21), wobei die Rippen (15) freie Kanten (24) besitzen, wobei jede gerippte Lage (21) eine Lage (22) und eine Vielzahl von Rippen (15) besitzt, wobei die Rippen (15) freie Kanten (24) besitzen;
2) Erstellen eines Stapels (25) der gerippten Lagen (21) durch Haftbefestigung der gerippten Lagen (21) zusammen mit der Lage (22) von jeder der gerippten Lagen (21) gegen die freien Kanten (24) der Rippen (15) an eine angrenzende gerippte Lage (21); und
3) Erstellen der zellulären Kerne (10) durch Herunterschneiden von Scheiben von dem Stapel (25) von gerippten Lagen (21), wobei senkrecht zu den Rippen (15) geschnitten wird.

2. Verfahren gemäß Anspruch 1, wobei der Schritt des zur-Verfügung-stellens einer Vielzahl von gerippten Lagen (21), eine Vielzahl von hohlen gerippten Lagen (21) zu erstellen, umfasst, wobei die Rippen (15) von jeder hohlen gerippten Lage (21) freie Kanten (24) besitzen, unter Verwendung folgender Schritte:
a) Zur-Verfügung-stellen einer Vielzahl von Lagen (22);
b) Zur-Verfügung-stellen einer ersten Vielzahl von Rippen (15);
c) Zur-Verfügung-stellen einer Haltevorrichtung, um eine zweite Vielzahl von Rippen (15) zu halten, welche aus der ersten Vielzahl von Rippen (15) ausgewählt ist, parallel zueinander mit einem Satz von Kanten (23) der zweiten Vielzahl von Rippen (15) in einer ebenen Fläche und ausgesetzt über der Haltevorrichtung;
d) Anbringen der zweiten Vielzahl von Rippen (15) in der Haltevorrichtung für jede der Vielzahl von hohlen gerippten Lagen (21);
e) Benutzung einer Haftbefestigung, welche eine der Vielzahlen von Lagen (22) an die ausgewählten Kanten (23) der zweiten Vielzahl von Rippen (15) befestigt;
f) Aushärten-lassen der Haftbefestigung; und
g) Entfernen von jeder der hohlen gerippten Lagen (21) aus der Haltevorrichtung.

3. Verfahren zur Herstellung von gefüllten Zell-zellulären Kernen (12), welche dazu geeignet sind, Holz zu benutzen, umfassend die Schritte von:
1) Zur-Verfügung-stellen einer Vielzahl von gefüllten gerippten Scheiben (32);
2) Zur-Verfügung-stellen einer Vielzahl von Lagen (31);
3) Herstellung eines Stapels (30) der Lagen (31) und gefüllten gerippten Scheiben (32), abwechselnd gestapelt und durch Haftung aneinander befestigt; und
4) In Scheiben schneiden der gefüllten zellulären Kerne (12) vom Stapel (30), wobei senkrecht zu den Rippen geschnitten wird.

4. Verfahren gemäß Anspruch 3, wobei der Schritt 1) des zur-Verfügung-stellens einer Vielzahl von gefüllten gerippten Scheiben (32) die Einzelschritte umfasst:
1a) Zur-Verfügung-stellen einer Vielzahl von Lagen (27);
1b) Zur-Verfügung-stellen einer Vielzahl von Füllschichten (28);
1c) Herstellung eines Stapels (28') von abwechselnd der Lagen (27) und der Füllschichten (28), welche anhaftend aneinander befestigt werden; und
1d) Herstellung der Vielzahl der gefüllten gerippten Scheiben (32) durch in-Scheiben-schneiden von diesen vom Stapel (28') von Schritt c), wobei senkrecht zu den Rippen geschnitten wird.

5. Verfahren gemäß irgendeinem der vorhergehenden Ansprüche, wobei die zellulären Kerne vom Stapel geschnitten oder in Scheiben geschnitten werden durch gekrümmte Schnitte, um gekrümmte zelluläre Kerne herzustellen.

6. Verfahren gemäß irgendeinem der vorhergehenden Ansprüche, wobei ein Stapel (25; 30) aus den gerippten Lagen (21) oder der gefüllten gerippten Scheiben (32) so hergestellt ist, dass die Rippen von angrenzenden gerippten Lagen (21) oder gefüllten gerippten Scheiben (32) ausgerichtet sind.

## Revendications

1. Procédé de fabrication d'âmes alvéolaires à cellules creuses (10) appropriées à l'utilisation de bois, comprenant les étapes de :
1) préparation d'une pluralité de feuilles nervurées (21), les nervures (15) présentant des bords libres (24), chaque feuille nervurée (21) comprenant une feuille (22) et une pluralité de nervures (15), lesdites nervures (15) présentant des bords libres (24) ;
2) création d'un empilement (25) desdites feuilles nervurées (21) par fixation adhésive desdites feuilles nervurées (21) ensemble, ladite feuille (22) de chacune desdites feuilles nervurées (21) étant placée contre lesdits bords libres (24) desdites nervures (15) sur une feuille nervurée adjacente (21) ; et
3) création desdites âmes alvéolaires (10) en découpant des tranches dudit empilement (25) de feuilles nervurées (21), par découpe perpendiculairement auxdites nervures (15).

2. Procédé selon la revendication 1, dans lequel l'étape de préparation d'une pluralité de feuilles nervurées (21) comprend la création d'une pluralité de feuilles nervurées creuses (21), les nervures (15) de chaque feuille nervurée creuse (21) présentant des bords libres (24), en utilisant les étapes suivantes :
a) préparation d'une pluralité de feuilles (22) ;
b) préparation d'une première pluralité de nervures (15) ;
c) préparation d'un dispositif de maintien destiné à maintenir une seconde pluralité de nervures (15), sélectionnées à partir de ladite première pluralité de nervures (15), parallèlement les unes aux autres, un premier ensemble de bords (23) de ladite seconde pluralité de nervures (15) étant dans un plan plat et exposé au-dessus dudit dispositif de maintien ;
d) installation, pour chacune de ladite pluralité de feuilles nervurées creuses (21), de ladite seconde pluralité de nervures (15) sur ledit élément de fixation ;
e) en utilisant une fixation adhésive, fixation de l'une de ladite pluralité de feuilles (22) sur ledit bord exposé (23) de ladite seconde pluralité de nervures (15) ;
f) durcissement de ladite fixation adhésive ; et
g) extraction de chacune desdites feuilles nervurées creuses (21) dudit dispositif de maintien.

3. Procédé de réalisation d'âmes alvéolaires à cellule pleine (12) appropriées à l'utilisation de bois, comprenant les étapes de :
1) préparation d'une pluralité de tranches nervurées pleines (32) ;
2) préparation d'une pluralité de feuilles (31) ;
3) réalisation d'un empilement (30) des feuilles (31) et tranches nervurées pleines (32), empilées de manière alternée et fixées de manière adhésive les unes sur les autres ; et
4) tranchage desdites âmes alvéolaires pleines (12) à partir de l'empilement (30), par découpe perpendiculaire aux nervures.

4. Procédé selon la revendication 3, dans lequel l'étape 1) de préparation d'une pluralité de tranches nervurées pleines (32) comprend les étapes secondaires de :
1a) préparation d'une pluralité de feuilles (27) ;
1b) préparation d'une pluralité de couches de charge (28) ;
1c) réalisation d'un empilement (28') à partir, de manière alternée, desdites feuilles (27) et desdites couches de charge (28), fixées par adhésif les unes sur les autres ; et
1d) réalisation de ladite pluralité desdites tranches nervurées pleines (32) par tranchage de celles-ci à partir dudit empilement (28') de l'étape c), par tranchage perpendiculairement auxdites nervures.

5. Procédé selon l'une quelconque des revendications précédentes, dans lequel lesdites âmes alvéolaires sont découpées ou tranchées à partir de l'empilement par des découpes courbes afin de réaliser des âmes alvéolaires incurvées.

6. Procédé selon l'une quelconque des revendications précédentes, dans lequel un empilement (25 ; 30) est réalisé à partir desdites feuilles nervurées (21) ou desdites tranches nervurées pleines (32), de telle sorte que les nervures de feuilles nervurées adjacentes (21) ou de tranches nervurées pleines (32) sont alignées.
